**Europäisches Patentamt**

**European Patent Office**

**Office européen des brevets**

(11) Veröffentlichungsnummer: **0 476 595 A2**

## (12) EUROPÄISCHE PATENTANMELDUNG

(21) Anmeldenummer: **91115764.2**

(22) Anmeldetag: **17.09.91**

(51) Int. Cl.5: **G01N 35/08**

(30) Priorität: **17.09.90 DE 9013193 U**

(43) Veröffentlichungstag der Anmeldung:
**25.03.92 Patentblatt 92/13**

(84) Benannte Vertragsstaaten:
**DE FR GB IT**

(71) Anmelder: **Gesellschaft für
Biotechnologische Forschung mbH (GBF)
Mascheroder Weg 1
W-3300 Braunschweig-Stöckheim(DE)**

(72) Erfinder: **Dremel, Bernd**

Mascheroder Weg 1
W-3300 Braunschweig(DE)
Erfinder: **Hanisch, Detlef**
Mascheroder Weg 1
W-3300 Braunschweig(DE)
Erfinder: **Schillig, Henning**
Mascheroder Weg 1
W-3300 Braunschweig(DE)

(74) Vertreter: **Boeters, Hans Dietrich, Dr. et al
Boeters & Bauer Bereiteranger 15
W-8000 München 90(DE)**

(54) **Fliessinjektionsanalyse-System.**

(57) Die Erfindung betrifft ein Fließinjektionsanalyse-System, das eine Reaktionskammer, Pumpen, Ventile und Detektionseinrichtungen sowie ggf. eine Mischkammer in einem Gehäuse umfaßt, wobei diese Elemente als Module ausgeführt sind und das Fließinjektionsanalyse-System dadurch gekennzeichnet ist, daß die Pumpen- und die Ventilmodule jeweils vorn am Gehäuse angeordnet sind.

EP 0 476 595 A2

Die Erfindung bezieht sich auf ein Fließinjektionsanalyse-System, umfassend Reaktionskammern, Pumpen, Ventile und Detektionseinrichtungen sowie ggf. Mischkammern in einem Gehäuse, wobei alle Elemente als Module ausgeführt sind oder sein können.

Die Fließinjektionsanalyse (FIA) ist ein naßchemisches Analyseverfahren, das sich in den letzten Jahren zu einer wertvollen und häufig angewendeten Methode entwickelt hat. Bei der Fließinjektionsanalyse wird die zu analysierende Probe in die Strömung einer geeigneten Flüssigkeit (Trägerflüssigkeit) injiziert und zusammen mit dieser einer Detektionseinrichtung zugeführt. Es werden somit herkömmliche Labortechniken auf einen kontinuierlichen Fließprozeß übertragen.

Der Aufbau eines Fließinjektionsanalyse-Gerätes ähnelt daher demjenigen einer Flüssig-Chromatographie-Anordnung, wobei die Trennsäule jedoch durch eine Reaktonsschleife bzw. -kammer ersetzt ist. Die Trägerflüssigkeit wird durch eine meist peristaltische Pumpe getrieben und die zu analysierende Probe durch ein Injektionsventil in die Trägerflüssigkeit injiziert. Eine Detektionseinrichtung, z.B. eine Elektrode, ein Photometer, Fluorimeter, Luminometer, etc., dient zur Anzeige des Probendurchgangs und in einer Auswerteeinrichtung wird der Analytgehalt der Probe quantitativ erfaßt. Bei einem einfach aufgebauten Fließinjektionsanalyse-Gerät ist im Trägerstrom ein Reagenz enthalten. Es kann auch vorgesehen sein, eine zu analysierende Probe in eine Strömung aus einer ein Reagenz enthaltenden Flüssigkeit zu injizieren. Im Fall teurer Reagenzien kann es vorteilhafter sein, das Reagenz in die Probe zu injizieren.

Gebräuchliche Techniken wie Pipettieren, Verdünnen, Mischen sowie auch chemische Reaktionen oder Messungen mit Elektroden oder Optoden können mit der Fließinjektionsanalyse vollautomatisch durchgeführt werden. Weitere Vorteile der Fließinjektionsanalyse sind, daß die zu analysierende Probe reproduzierbar in einen nicht segmentierten Trägerstrom eingebracht werden kann, die Aufenthaltszeit der Probe in der Probenzone exakt reproduzierbar ist und die Dispersion der Probenzone kontrollierbar ist. Die Fließinjektionsanalyse eignet sich daher insbesondere für aufwendige Analyseverfahren, z.B. zur Fermentationsanalyse, die mit gestiegenen Qualitätsanforderungen, verschärftem Wettbewerb und neu entwickelten Prozessen zunehmend angewendet werden und bei denen immer mehr Inhaltsstoffe untersucht werden.

Insbesondere ermöglicht es die Verwendung von Enzymen bei der Fließinjektionsanalyse, Analyte auch in komplexen Medien zu bestimmen. Hierzu muß allerdings eine Immobilisierung im Fließsystem erfolgen. Bei den enzymatischen Umsetzungen kann zum einen der Verbrauch von Edukten wie z.B. Sauerstoff und zum anderen die Bildung von Produkten wie z.B. Wasserstoffperoxid, Kohlendioxid oder Säuren gemessen werden.

In der DE-OS 37 37 604 ist ein Fließinjektionsanalyse-System der eingangs genannten Art beschrieben, bei dem die Systemkomponenten modular ausgeführt und in einem Gehäuse hintereinander, entlang einer Führung verschiebbar angeordnet sind. Die Module eignen sich insbesondere für den Einbau in Standardeinschübe, insbesondere 19"-Racks.

Zwar gibt es bereits sehr aufwendige Analyseverfahren. In der Prozeßkontrolle herrschen indessen noch immer die herkömmlichen naßchemischen Methoden vor. Viele interessierende Inhaltsstoffe können mittels dieser Methoden nicht genau oder nicht schnell genug bestimmt werden.

Der Erfindung liegt die Aufgabe zugrunde, ein Fließinjektionsanalyse-System zu schaffen, das vielseitig einsetzbar ist und sehr bedienungs- und wartungsfreundlich ist.

Diese Aufgabe ist bei einem Fließinjektionsanalyse-System mit den Merkmalen des Anspruchs 1 gelöst. Vorteilhafte Weiterbildungen des erfindungsgemäßen Fließinjektionsanalyse-Systems sind Gegenstand der Unteransprüche.

Ein erfindungsgemäßes Fließinjektionsanalyse-System umfaßt somit eine Reaktionkammer, Pumpen, Ventile und eine Detektionseinrichtung sowie ggf. eine Mischkammer in einem Gehäuse, wobei sie als Module ausgeführt sind und die Pumpen- und die Ventilmodule jeweils vorne am Gehäuse angeordnet, vorzugsweise an abnehmbaren Frontplatten des Gehäuses angebracht, sind.

Bei dem erfindungsgemäßen Fließinjektionsanalyse-System sind die Pumpen und Ventile frontseitig am Gehäuse und damit besonders gut zugänglich angeordnet, wobei diese Systembestandteile als Module ausgeführt sind. Dies bringt den Vorteil mit sich, daß die Pumpen- und Ventilmodule sehr leicht ausgewechselt werden können. Hierdurch sind einerseits im Falle eines Defektes oder von Wartungsarbeiten und andererseits bei einem Umbau des Analysesystems die Kontroll- und Bedienarbeiten vereinfacht und die Betriebskosten wesentlich herabgesetzt.

Vorteilhaft sind die Frontplatten des Gehäuses mit den Pumpen- und Ventilmodulen abnehmbar und damit besonders leicht austauschbar. Es braucht kein Gehäuseeinschub geöffnet und herausgezogen werden, um Zugang zu den Pumpen- und Ventilmodulen zu erhalten.

Bevorzugt werden die Pumpen- und Ventilmodule an standardisierten Frontplatten angebracht. Hierdurch ist der Aufbau des erfindungsgemäßen Fließinjektionsanalyse-Systems besonders flexibel und kostengünstig.

Der Ausbau und Austausch von Pumpen- und Ventilmodulen ist bei einer bevorzugten Ausführungsform des erfindungsgemäßen Fließinjektionsanalyse-Systems dadurch vereinfacht, daß die elektrischen Verbindungen vom Naßteil getrennt ausgeführt sind, wobei die elektrischen Verbindungen der Pumpen- und Ventilmodule zweckmäßig auf der Rückseite im Inneren des Gehäuses geführt und als Steckverbindungen ausgeführt sind. Als Steckverbindungen werden vorteilhaft Breitbandsteckverbindungen verwendet. Für einen Modulausbau braucht dann lediglich auf der Rückseite im Gehäuse der entsprechende Stecker gezogen zu werden. Hierdurch sind die Wartung und Kontrolle des Naßteils vereinfacht und es können des weiteren Anpassungen des erfindungsgemäßen Fließinjektionsanalyse-Systems an andere Analysenaufgaben rasch durchgeführt werden.

Selbstverständlich ist es auch denkbar, daß außer den Pumpen- und Ventilmodulen weitere Baueinheiten bzw. Module des erfindungsgemäßen Fließinjektionsanalyse-Systems frontseitig angeordnet sind.

Das Gehäuse weist vorteilhaft auf der Vorderseite eine oder mehrere transparente Abdeckungen auf. Dies ermöglicht eine Beobachtung des Naßteils des Fließinjektionsanalyse-Systems von außen. Auftretende Lecks können so erkannt werden, bevor die Flüssigkeit irgendwo aus dem Gehäuse austritt. Als transparente Abdeckung kann das Gehäuse auch eine Glastür aufweisen.

Das erfindungsgemäße Fließinjektionsanalyse-System umfaßt gemäß einer bevorzugten Ausführungsform mehrere Mischkammern, zweckmäßig in verschiedenen Größen, auf. Dies ermöglicht es, den Analyten in sehr großen Konzentrationsbereichen zu verdünnen und abzupuffern.

Des weiteren können auch vorteilhaft jeweils zwei Pumpen und zwei Ventile mit einer Misch- und/oder einer vorzugsweise magnetischen betriebenen Rührkammer zu einem Modul, beispielsweise einem Verdünnungsmodul (Zone-sampling-Verdünnungsmodul), zusammengestellt sein. Eine solche Zusammenstellung ist durch den modularen Aufbau des erfindungsgemäßen Fließinjektionsanalyse-Systems erleichtert.

Bevorzugt ist auch eine multiplexfähige Mehrwegeventilanordnung vorgesehen. Die Mehrwegeventile, die als 6-Wege-Ventile (z.B. LATEK, TMW-6-Ventile) ausgeführt sein können, dienen zum Umschalten von einer Kalibrierflüssigkeit auf eine andere, d.h. ohne weiteren apparativen Aufwand kann beispielsweise eine Nachkalibration durchgeführt werden. Es können z.B. 5 Kalibrierlösungen und eine Probenlösung vorgesehen sein. Andererseits ist jedoch auch der Anschluß von mehr als einem Fermenter an das Analysegerät denkbar. Des weiteren können mittels dieser Mehrwegeventile mehrere Analyte bestimmt werden, indem z.B. auf einen anderen Enzymreaktor umgeschaltet wird. Ferner ermöglichen die Mehrwegeventile die Verwendung verschiedener Pufferlösungen für verschiedene Enzymreaktionen. Letzteres ist zweckmäßig, denn es gibt verschiedene optimale pH-Werte für die verschiedenen Enzymreaktionen. So wird z.B. ein pH-Wert von 7,5 für die Lactatbestimmung mit immobilisierter Lactatoxidase und ein pH-Wert von 5,0 für die Glutaminbestimmung mit immobilisierter Glutaminase und immobilisierter Glutamatoxidase gewählt.

Weiter sind vorzugsweise unten im Gehäuse als Module ausgeführte Tanks für Reagenz-, Puffer- und Abfallflüssigkeiten vorgesehen. Hierdurch ist die Handhabung dieser Baueinheiten vereinfacht, und ein eventuelles Auslaufen von Flüssigkeit aus den Tanks hat geringstmögliche Auswirkung auf die restlichen Baueinheiten.

Vorteilhaft ist eine speicherprogrammierte Steuerung für die Module vorgesehen, die zweckmäßig ebenfalls im Gehäuse untergebracht ist. Für eine solche speicherprogrammierte Steuerung werden bevorzugt sogenannte Klöckner-Möller-SPS-Timer eingesetzt. Einer der SPS-Timer enthält das Programm zur Ansteuerung der Ventile und Pumpen und der andere der SPS-Timer wird zur Relaiserweiterung benötigt (1. Slave). Die SPS-Timer haben jeweils 8 Ein- und Ausgänge, so daß mit zwei SPS-Timern insgesamt 16 Ausgänge gesteuert werden können. Beispielsweise werden bei einer Anordnung mit zwei Verdünnungsmodulen 8 Relaisausgänge benötigt, nämlich 2 Relaisausgänge pro Ventil (Drehen in die Füll- bzw. Injektionsposition) und 2 Relaisausgänge pro Pumpe (Ein- bzw. Ausschalten) sowie 4 Relaisausgänge für die Ansteuerung der Mehrwegeventile (1 Impulseingang pro Mehrwegeventil).

Die speicherprogrammierte Steuerung weist vorteilhaft eine eigene Spannungsversorgung auf. In diesem Fall müssen nämlich nicht die relativ kostspieligen PC-Karten für eine Ansteuerung über die Eingänge verwendet werden.

Zweckmäßig weist die speicherprogrammierte Steuerung, insbesondere in der Ausführungsform als SPS-Timer, innere Ein- und Ausgänge mit zugeordneten Anzeigen, z.B. Leuchtdioden, auf der Frontseite des Gehäuses auf. Diese Anzeigen, bei der oben beschriebenen Ausführung mit zwei SPS-Timern 16 Leuchtdioden, dienen zu Kontrollzwecken. Die Leuchtdioden können beliebig festlegbaren Systemzuständen zugeordnet werden, z.B. Alarmausgängen für Fehlfunktionen, Anzeigen für den Flüssigkeitsstand in den Tanks, etc.). Weitere 16 Leuchtdioden dienen dazu anzuzeigen, daß an den entsprechenden inneren Ein- und Ausgängen eine Spannung anliegt.

Die speicherprogrammierte Steuerung kann auch dazu verwendet werden, eine Signalverarbeitung durchzuführen. Vorzugsweise wird eine solche Signalverarbeitung nur auf die Signalvorverarbeitung bzw. -aufbereitung für eine nachgeschaltete Auswerteeinheit, z.B. einen PC-Rechner, beschränkt. Der Grund hierfür ist, daß insbesondere die SPS-Timer nur in einer schwer lesbaren Maschinensprache programmierbar sind. Indessen ist es jedoch möglich, z.B. auf einem PC mittels eines Zusatzprogramms wie z.B. SUCO-Soft die Programmierung in einer höheren Programmiersprache wie z.B. Pascal oder Cobol (C) durchzuführen und diese über eine entsprechende Schnittstelle direkt auf die SPS-Timer zu übertragen.

Die Auswerteeinheit ist z.B. gemäß Obigem zweckmäßig im Gehäuse mit untergebracht. Günstig ist die Unterbringung der Rechnersteuerung und der Auswerteeinheit in einem eigenen Einschub oben im Gehäuse des Fließinjektionsanalyse-Systems.

Zur Auswertung kann beispielsweise ein Mehrkanalschreiber verwendet werden. Bevorzugt wird indessen ein Rechner.

Werden Auswerteprogramme verwendet, die nur die Ansteuerung und die Auswertung von wenigen, z.B. zwei Parametern, übernehmen können, können die SPS-Timer alternativ zur Direktsteuerung der Verdünnungsmodule eingesetzt werden. Zu diesem Zweck wird den SPS-Timern zu bestimmten Zeitpunkten vom Rechner ein Signal auf einen ihrer 16 Eingänge gegeben. Abhängig von einem solchen Signal wird dann in den SPS-Timern ein dort festgelegtes bzw. gespeichertes Programm aufgerufen und gestartet. Dies ermöglicht es, z.B. über 6 Eingänge 6 Programme für verschiedene Analyte zu starten. Mittels eines solchen Programms können die Analyte gleichzeitig und unabhängig bestimmt werden. Es wurden auf diese Weise während einer 14tägigen tierischen Zellkultur Glucose und Lactat bestimmt.

Ferner können durch Kombination mit den übrigen 10 Eingängen je 10 Verdünnungsstufen, entsprechend 10 unterschiedlichen Zeitspannen zwischen den Injektionsventilen des Verdünnungsmoduls eingestellt werden. Während der obigen 14tägigen Untersuchung wurden so mittels der Verdünnungs- bzw. Zonesampling-Technik die jeweils optimalen Verdünnungen der Kultur- bzw. Fermentationslösungen eingestellt. Hierdurch konnte das zu analysierende Medium so verdünnt und abgepuffert werden, daß in dem steilen Ansprechbereich der eingesetzten Biosensoren gearbeitet werden konnte.

Wie oben beschrieben wurde, sind die wesentlichen Vorteile des erfindungsgemäßen Fließinjektionsanalyse-Systems die frontseitige Anbringung zumindest einiger Baueinheiten und dessen modularer Aufbau, der sich keinesfalls auf die Pumpen und die Ventile beschränken muß. Hierdurch kann das Fließinjektionsanalyse-System sehr flexibel entsprechend seinen jeweiligen Aufgaben zusammengestellt werden. Die Bausteine können schnell ausgetauscht werden und ferner rasch eine Anpassung an andere Analysenaufgaben vorgenommen werden. Insbesondere durch diesen Aufbau und auch durch eine saubere Trennung von Naßteil und Elektronik sind die Wartung und Kontrolle des Naßteils vereinfacht.

Eine zweckmäßige Ausführung des erfindungsgemäßen Fließinjektionsanalyse-Systems ist ein mobiler Turm mit modularer 19"-Industriestandardtechnik. Dieser Aufbau eignet sich auch für den Einsatz in feuchten Räumen.

Das erfindungsgemäße Fließinjektionsanalyse-System eignet sich insbesondere zur Fermentationskontrolle. Anwendungsbeispiele sind z.B. die On-line-Bestimmung von Milchsäure einer Kefir-Fermentation unter Verwendung eines faseroptischen Milchsäure-Biosensors, die On-line-Glucose- und Lactat-Überwachung der Fermentation einer tierischen Zellkultur unter Verwendung eines faseroptischen Detektionssystems, die Bestimmung von Glucose in Wein und Fruchtsaft unter Verwendung eines faseroptischen Glucose-Biosensors.

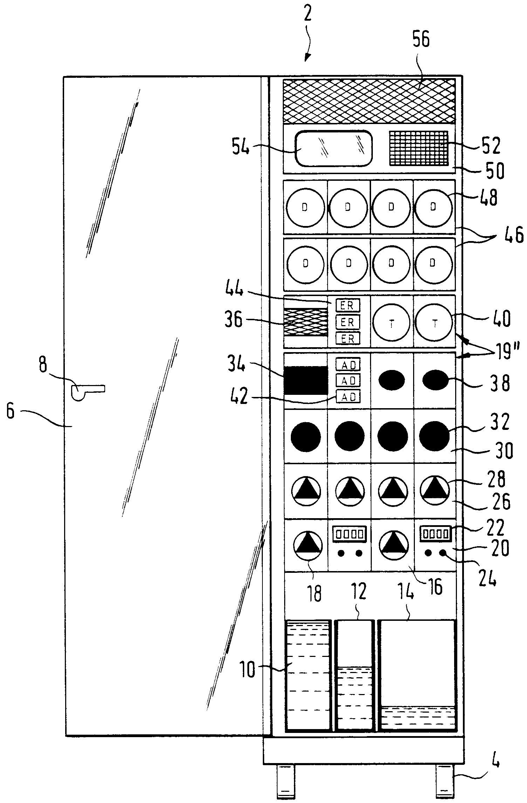

Die Erfindung wird im folgenden weiter anhand eines bevorzugten Ausführungsbeispiels und der Zeichnung erläutert. Die einzige Figur der Zeichnung zeigt die Vorderansicht eines prozeßgesteuerten erfindungsgemäßen Fließinjektionsanalyse-Systems.

Das in der Zeichnung dargestellte Ausführungsbeispiel der Erfindung ist ein turmartig ausgeführtes programmierbares Fließinjektionsanalyse-System. Das Fließinjektionsanalyse-System umfaßt ein Gehäuse 2, dessen Abmessungen so gewählt sind, daß es Standard-Einschübe (19") aufnehmen kann. Das Gehäuse 2 ist auf feststellbaren Rollen 4 gelagert, die ein lenkbares Verschieben des Gehäuses ermöglichen. Auf der Vorderseite ist am Gehäuse 2 eine schwenkbare Glastür 6 mit Bedienungshandgriff 8 angebracht, die die gesamte Vorderseite des Gehäuses abdeckt und zu Sicherheitszwecken vorgesehen ist.

Unten im Gehäuse 2 befinden sich drei Tanks 10, 12, 14 für die Reagenz-, Puffer- und Abfallflüssigkeiten. Oberhalb davon weist das Gehäuse 2 eine Anordnung von 7 Reihen mit jeweils 4 Frontplatten auf. Die unterste Reihe weist jeweils zwei Frontplatten 16, auf deren Vorderseite variable Pumpen 18 angebracht sind, sowie zwei Frontplatten 20 auf, die jeweils eine Anzeige 22 und zwei Betätigungsknöpfe bzw. -tasten 24 tragen. Mittels der Betätigungsknöpfe 24 kann die Pumpleistung eingestellt werden. Oberhalb der Frontplattenreihe mit den variablen Pumpen befinden sich vier Frontplatten 26, auf deren Vorderseite jeweils Pumpen 28 angebracht sind.

Darüber ist eine Reihe mit vier Frontplatten 30 angeordnet, die jeweils Ventile 32 tragen. Die nächsten beiden Frontplattenreihen decken sogenannte Manifold-Einheiten ab, z.B. mit kleinen Misch- und Rührkammern 34, 36, Misch- oder Einspritzventilen 38, 40 sowie Anzeigefeldern 42, 44. Die beiden obersten Reihen der Frontplatten 46 tragen insgesamt acht Detektoren, die z.T. ebenfalls außen angebracht sind.

Bei sämtlichen Baueinheiten sind die elektrischen Verbindungen hinter den Frontplatten im Gehäuseinneren geführt, so daß sich eine gute Trennung der elektrischen Verbindungen vom Naßteil ergibt.

Darüber befindet sich ein Einschub 50. Er weist ein Bedienungsfeld 52 mit diversen Tasten o.dgl. und einen Monitor 54 auf. Ganz oben im Gehäuse ist ein Einschub 56 mit einem Rechner und einer Auswerteeinheit angeordnet. Die Anzeige des Rechners und der Auswerteeinheit erfolgt über den Monitor 54.

Wie die Figur und ihre Beschreibung veranschaulichen, enthält das erfindungsgemäße Fließinjektionsanalyse-System eine Vielzahl von als Module ausgeführten Baueinheiten, die größtenteils außen und einzeln abnehmbar angebracht sind. Diese gute Zugänglichkeit der Baueinheiten ist ein besonderer Vorteil des Systems.

**Patentansprüche**

1. Fließinjektionsanalyse-System, umfassend eine Reaktionskammer, Pumpen, Ventile und eine Detektionseinrichtung sowie ggf. eine Mischkammer in einem Gehäuse, wobei sie als Module ausgeführt sind, dadurch **gekennzeichnet,** daß die Pumpen- und die Ventilmodule (18, 28, 32) jeweils vorne am Gehäuse (2) angeordnet sind.

2. Fließinjektionsanalyse-System nach Anspruch 1, dadurch **gekennzeichnet,** daß die Pumpen- und Ventilmodule (18, 28, 32) an abnehmbaren Frontplatten (16, 26, 30) des Gehäuses (2) angebracht sind.

3. Fließinjektionsanalyse-System nach Anspruch 1 oder 2, dadurch **gekennzeichnet,** daß das Gehäuse (2) standardisierte Frontplatten (16, 26, 30) aufweist.

4. Fließinjektionsanalyse-System nach einem der Ansprüche 1 bis 3, dadurch **gekennzeichnet,** daß das Gehäuse (2) auf der Vorderseite eine oder mehrere transparente Abdeckungen aufweist.

5. Fließinjektionsanalyse-System nach Anspruch 4, dadurch **gekennzeichnet,** daß das Gehäuse (2) als transparente Abdeckung eine Glastür (6) aufweist.

6. Fließinjektionsanalyse-System nach einem der Ansprüche 1 bis 5, dadurch **gekennzeichnet,** daß die elektrischen Verbindungen vom Naßteil getrennt ausgeführt sind.

7. Fließinjektionsanalyse-System nach einem der Ansprüche 1 bis 6, dadurch **gekennzeichnet,** daß die elektrischen Verbindungen der Pumpen- und Ventilmodule auf der Rückseite im Gehäuses geführt und/oder als Steckverbindungen ausgeführt sind.

8. Fließinjektionsanalyse-System nach einem der Ansprüche 1 bis 7, dadurch **gekennzeichnet,** daß mehrere Mischkammern, insbesondere in verschiedenen Größen, und/oder eine multiplexfähige Mehrwegeventilanordnung vorgesehen sind.

9. Fließinjektionsanalyse-System nach einem der Ansprüche 1 bis 8, dadurch **gekennzeichnet,** daß jeweils zwei Pumpen und zwei Ventile mit einer Mischkammer zu einem Modul zusammengestellt sind.

10. Fließinjektionsanalyse-System nach einem der Ansprüche 1 bis 9, dadurch **gekennzeichnet,** daß unten im Gehäuse (2) als Module ausgeführte Tanks (10, 12, 14) für Reagenz-, Puffer- und Abfallflüssigkeiten vorgesehen sind.

11. Fließinjektionsanalyse-System nach einem der Ansprüche 1 bis 10, dadurch **gekennzeichnet,** daß eine speicherprogrammierte Steuerung für die Module vorgesehen ist.

12. Fließinjektionsanalyse-System nach Anspruch 11, dadurch **gekennzeichnet,** daß die speicherprogrammierte Steuerung im Gehäuse untergebracht ist.

13. Fließinjektionsanalyse-System nach Anspruch 10 oder 12, dadurch **gekennzeichnet,** daß die speicherprogrammierte Steuerung eine eigene Spannungsversorgung aufweist.

14. Fließinjektionsanalyse-System nach einem der Ansprüche 11 bis 13, dadurch **gekennzeichnet,** daß die speicherprogrammierte Steuerung innere Ein- und Ausgänge mit zugeordneten Anzeigen auf der Frontseite des Gehäuses aufweist.

15. Fließinjektionsanalyse-System nach einem der Ansprüche 1 bis 14, dadurch **gekennzeichnet,** daß die Auswerteeinheit (56) in dem Gehäuse (2) untergebracht ist.

16. Verwendung des Fließinjektionsanalyse-Systems nach einem der Ansprüche 1 bis 15 zur Fermentationskontrolle.